# EUROPEAN PATENT APPLICATION

(11) **EP 1 578 136 A2**
(43) Date of publication of application: **21.09.2005**
(21) Application number: 05104841.1
(22) Date of filing: 26.01.1999
(51) Int. Cl.: H04N 7/30, H04N 7/26

(54) **Method and apparatus for encoding video shape and texture information**

(30) Priority: 27.01.1998 US 72680 P
(62) Divisional of application: 99101094.3
(71) Applicant: AT&T Corp., New York, NY 10013-2412 (US)
(72) Inventor: Ostermann, Joern, Red Bank, NJ 07701 (US)
(74) Representative: Modiano, Guido

(57) **Abstract**

The present invention concerns an encoding apparatus comprising: an image analysis module that generates shape, texture and motion information from image data representing at least a video object; a parameter coding module that adjusts texture information generated by the image analysis module based on original shape information from the image analysis module and encodes the adjusted texture information and shape and motion information; a decoding module that decodes encoded texture, shape and motion information from the parameter coding module; and a memory that stores decoded data from the decoding module. Further, the invention relates to a method of encoding texture information for a video object, the method comprising: performing image analysis to create a bounding shape for a current video object plane Sₖ (VOP Sₖ); estimating texture and shape motion parameters for the VOP Sₖ; predictively encoding the texture and shape motion parameters with respect to a reference VOP S'ₖ₋₁; transmitting and decoding the encoded texture and shape motion parameters; and storing a new reference VOP in memory.

## Description

### BACKGROUND OF THE INVENTION

### 1. Field of Invention

This invention relates to encoding video texture information, especially encoding information consistent with the MPEG-4 standard.

### 2. Description of Related Art

MPEG-4 Visual, that part of the upcoming MPEG-4 standard describing the coding of natural and synthetic video signals, allows the encoding of video objects using motion, texture and shape information Video objects, e.g., distinct bodies or portions in an image, are identified and the outline, i.e., shape, of the video object is identified. In one aspect of MPEG-4 Visual, shape information for a video object in the form of a bitmap is coded, and then the coded shape information is used to pad texture information and to code the texture information.

### SUMMARY OF THE INVENTION

Using coded shape information to pad and code texture information can cause problems, such as increasing the overall bit rate when lossy coded shape information is transmitted. The inventor has discovered that using original shape information, i.e., uncoded shape information, to pad texture information before coding makes shape distortion less visible and decreases the overall data rate, especially when lossy coding shape information.

The invention provides a method and apparatus for coding video information wherein original shape information for a video object is used to adjust texture information before the texture information is coded. In a preferred embodiment consistent with the MPEG-4 standard, shape information is generated by first identifying a video object in a video frame, or portion of a frame, and generating a bitmap defining an outline of the video object in a current time instant, i.e., a current video object plane (VOP). This unencoded shape information is then used to determine which area(s) of the texture prediction error or other texture parameters, e.g., texture information for the current VOP before the texture prediction error is determined, for the current VOP should be padded. The unpadded texture prediction error is determined based on padded reference VOP texture information, predicted texture motion information for the current VOP and unpadded texture information for me current VOP. The padded reference VOP texture information and the predicted texture motion information for the current VOP are used to generate predicted texture information for the reference VOP The difference between the predicted texture information for the reference VOP and the texture information for the current VOP is the texture prediction error

The invention also provides techniques for smoothing object boundaries to provide a more predictable quality of lossily encoded shapes. According to one aspect of the invention, filtering, such as morphological filtering, is used to smooth object boundaries of a video object before encoding in order to decrease or maintain an overall bitrate for the transmitted data. The filtering can be performed on motion-compensated shape prediction error using an unencoded, or original, shape as a reference. Thus, a change in an object's topology can be avoided while maintaining a subjective appearance of the decoded video object and minimizing the overall bitrate of encoded image data. Morphological filtering can be performed on an entire VOP or on each boundary block of an object.

The invention also provides techniques for significantly decreasing the computational complexity of encoding video information while having little affect on the overall bit rate and/or subjective image quality. Lossy shape coding can be done without subsampling with little affect on subjective image quality or overall bit rate. Similarly, the encoder can operate so that only horizontal scanning of macroblocks is enabled during shape coding, rather than allowing adaptive scanning, i.e., adaptively switching between horizontal and vertical scanning. Using only horizontal scanning usually increases the shape bitrate by approximately 1-8%, but significantly decreases the computational complexity of the encoder and has little influence on the overall bitrate.

These and other aspects of the invention will be apparent or obvious from the following description.

### BRIEF DESCRIPTION OF THE DRAWINGS

The invention is described in detail with regard to the following figures wherein like numerals reference like elements, and wherein:
Fig. 1 is a schematic block diagram of an encoding apparatus;
Fig. 2 shows an example video image;
Fig. 3 shows a video object from the Fig. 3 image and corresponding bounding box;
Fig 4 is a schematic block diagram of a portion of the parameter coding module of the Fig. 1 encoding apparatus;
Fig 5 shows an example reference VOP and current VOP;
Fig. 6 shows one boundary macroblock from Fig. 5;
Figs. 7 and 8 show templates for determining a shape context for pels;
Fig. 9 shows an exemplary video object and a corresponding original shape, predicted shape and shape after coding/decoding; and
Fig. 10 shows a flow chart of steps of a method for coding texture information in accordance with the invention.

### DETAILED DESCRIPTION OF PREFERRED EMBODIMENTS

The invention is described in connection with video data encoding in accordance with the MPEG-4 standard. However, the invention can be used with other compression techniques. In addition, although a brief description of MPEG-4 encoding is provided below to give context to the invention, a detailed description of all of the aspects of MPEG-4 encoding is not provided since the details of standard MPEG-4 encoding are well known to those of skill in the art.

MPEG-4 Visual allows the transmission of arbitrarily shaped video objects (VO) in a video sequence. As discussed above, a time instant of a VO is a video object plane (VOP), which can be a rectangular video frame or a part of a video frame.

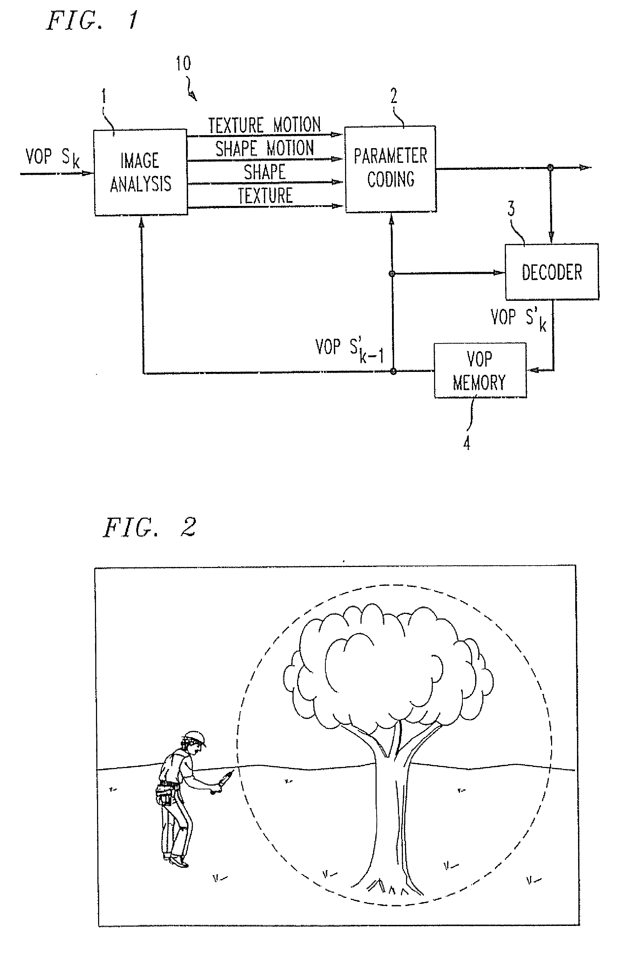

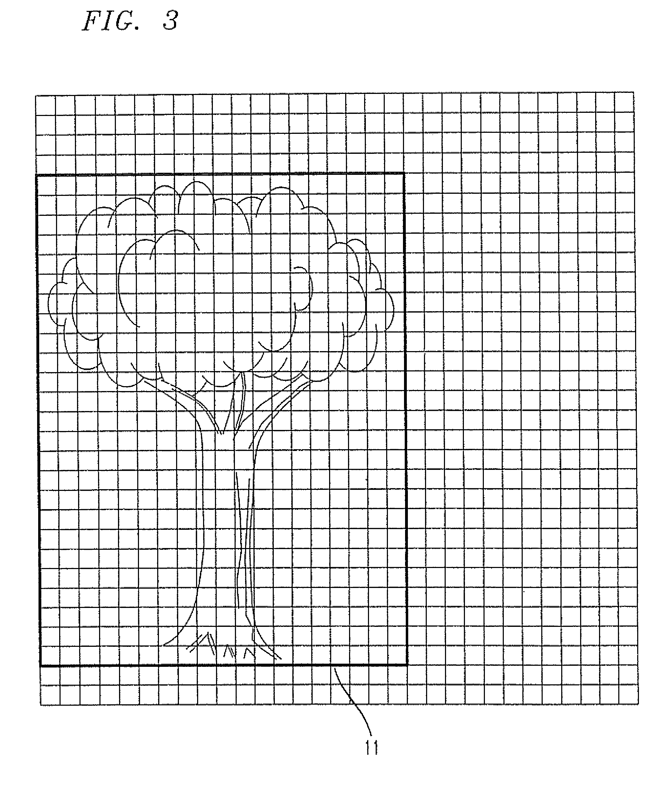

Fig. 1 is a schematic block diagram of an encoding apparatus 10 for encoding video data consistent with the MPEG-4 standard. To encode data for a VO, data representing a current VOP S for the VO is received and processed by an image analysis module 1. For example, data for the tree VO in the image shown in Fig. 2 could be provided to the image analysis module 1. The image analysis module 1 creates a bounding box 11 for the current VOP for the tree VO, as shown in Fig. 3. The bounding box 11 is a rectangular box of minimum size that completely contains the VO. Each side of the bounding box 11 has a length equal to a multiple of 16 pels (i.e., the macroblock size. The boxes shown in Fig. 3 are macroblocks, not pels). Three different types of macroblocks inside the bounding box can be identified: transparent macroblocks which are positioned outside of a VO, opaque macroblocks which are positioned inside of a VO, and boundary macroblocks which are positioned at the boundary of the VO and include portions both inside and outside of the abject. The image analysis module 1 transmits shape, texture, shape motion and texture motion parameters to a parameter coding module 2, which produces encoded texture, motion and shape information in a single bit stream for each VO. Shape motion and texture motion information is generated with respect to a prior reference VOP S' which has been previously processed, encoded by the parameter coding module 2, decoded by a decoding module 3, stored in a VOP memory 4, and fed back to the image analysis module 1 and the parameter coding module 2

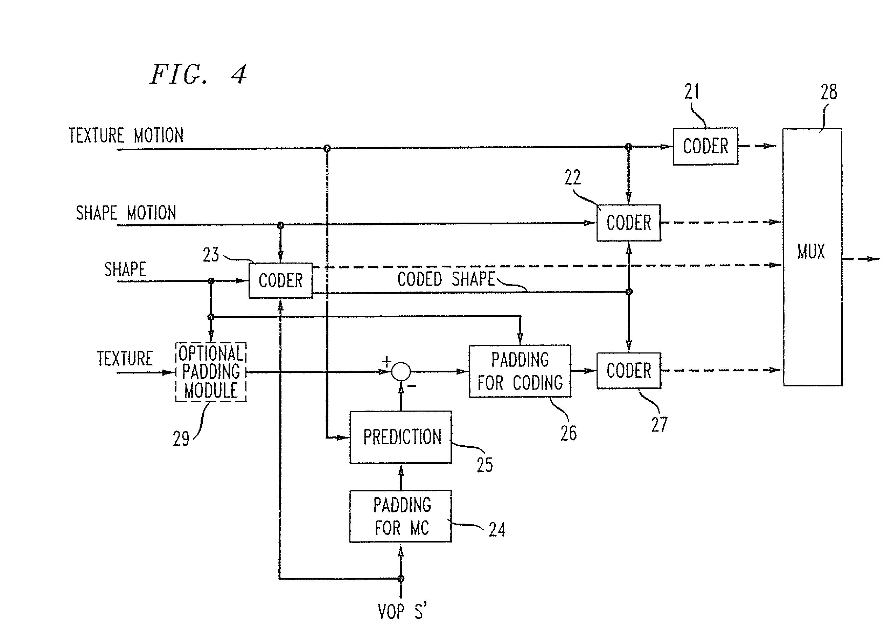

Based on the shape, texture and motion information from the image analysis module 1 and the VOP memory 4, the parameter coding module 2 predictively codes the shape, texture, shape motion and texture motion parameters for the VO. As shown in Fig 4, texture motion and shape motion parameters are coded by coding modules 21 and 22, respectively The shape parameters are coded by a coding module 23 based on uncoded shape motion information and information regarding the reference VOP S'. Shape motion parameters are coded by the coding module 22 based on texture motion information and coded shape information from the coding module 23.

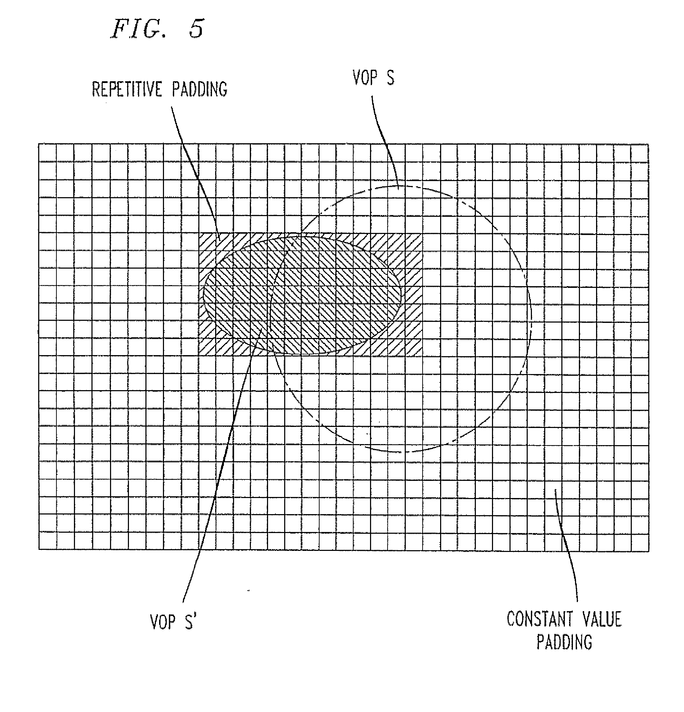

Coding of texture information in an inter mode is performed by first padding the reference VOP S' in a padding module 24 For motion compensated prediction of the texture of the current VOP S, the reference VOP S' is motion compensated using overlapped block motion compensation. Then, the boundary and transparent blocks of the reference VOP are padded. Boundary blocks are padded using repetitive padding where boundary pels are first replicated in the horizontal direction, and then in the vertical direction. If a value can be assigned to a pel by both padding directions, an average value is assigned to the pel A simpler mean padding is used in a second step where transparent macroblocks bordering boundary blocks are assigned an average value determined from the pels of its neighboring padded blocks. For example, Fig. 5 shows a reference VOP S' that has been repetitively padded and padded using a constant value process Blocks shown in Fig 5 are macroblocks, not individual pels The current VOP S related to the reference VOP S' is also shown in Fig. 5.

When the reference VOP S' has been padded, texture information for the current VOP S is predicted in a prediction module 25 based on texture motion information for the current VOP S and the padded reference VOP S' The difference between the texture information for the current VOP S and the predicted texture information is the texture prediction error provided to a second padding module 26. Based on the prediction error and original shape information for the current VOP S, the second padding module 26 pads the prediction error As used herein, the term original shape information refers to unencoded shape information, and not shape information derived from encoded shape information.

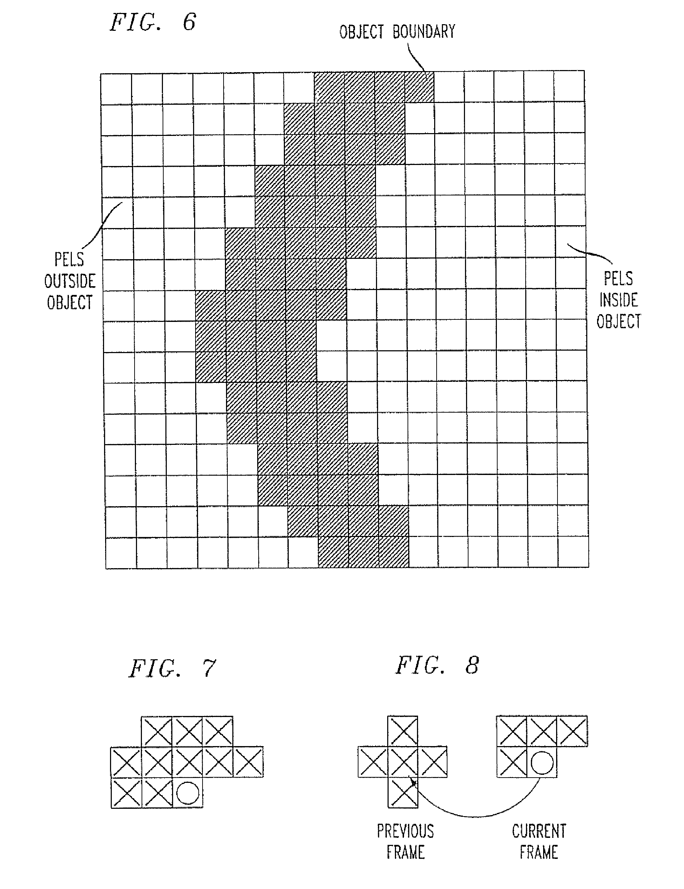

The texture prediction error is padded using the original shape parameters so that in the inter mode, padding of the prediction error is preferably done using a "0 padding" technique. Since the prediction error in the inter mode has a mean of 0, 0 padding, i.e., padding pels outside of the object (as defined by the original shape information) with a 0 value, is very appropriate. In the intra mode, a lowpass extrapolation filter is preferably used. For a preferred lowpass extrapolation filter, the average signal value for the VO in each boundary block is assigned to pels outside of the object as defined by the original shape information. Then, for each pel outside of the object, the average of each pel's 4 neighboring pels is assigned This process is started in the top left corner of each macroblock and is repeated in scan order. The result is a smooth extrapolation of the texture signal at the object boundary. As an example, Fig. 6 shows a single boundary macroblock for a VO. Pels on the outside of the object's boundary are 0 padded in the inter mode In the intra mode, pels outside of the object are assigned an average signal value for pels in the boundary block. Then, for pels outside of the object, the average of each pel's 4 neighboring pels is assigned.

Once the prediction error or other texture information is padded, the prediction error or other texture information is coded by a coding module 27 based in part on coded shape information from the coding module 23. Coded parameters are output by the multiplexer 28

Additional padding of the texture parameters for the current VOP can also be performed in an optional padding module 29 based on original shape information. This padding can be performed in addition to padding performed in the second padding module 26 or in place of padding in the second padding module 26.

Coding of the shape information is performed by a context-based arithmetic coder (not shown) in the coding module 23. As discussed above, three different types of macroblocks are identified: transparent macroblocks which are positioned outside of a VO, opaque macroblocks which are positioned inside of a VO, and boundary macroblocks which are positioned at the boundary of the VO and include portions both inside and outside of the object. Two types of VOs are possible: opaque objects and transparent objects For opaque objects, shape information in the boundary blocks is encoded as a bitmap. For transparent objects, binary shape information and a transparency value are preferably used. The transparency can also be described by a gray-scale alpha map defining the outline as well as the varying transparency of an object. However, the outline of transparent objects in the boundary blocks is also encoded as a bitmap using the binary shape coder.

For boundary macroblocks in the intra mode, a template of 10 pels shown in Fig. 7 is used to define the causal context for predicting the shape value of the current pel. The template extends up to 2 pels to the left, to the right and to the top of the pel to be coded. Thus, for encoding the pels in the left ends of the top two rows of a macroblock, parts of the template are defined by shape information of already transmitted macroblocks positioned above and to the left of the current macroblock. For the 2 right-most columns, undefined pels of the context are set to the value of its closest neighbor inside the current macroblock.

To increase coding efficiency and allow lossy shape coding, a macroblock can be subsampled by a factor of 2 or 4, which results in a sub-block of 8x8 or 4x4 pels, respectively The sub-block is encoded and the subsampling factor is transmitted to the decoder so that the decoder can decode the shape information and upsample the decoded sub-block to macroblock size Depending on the upsampling filter, the decoded shape can appear somewhat blocky. A preferred upsampling filter in terms of subjective picture quality is an adaptive non-linear upsampling filter. However, subsampling is preferably not used by the encoder because subsampling has no predictable effect on the overall bit rate and significantly increases the computational complexity of the encoder and decoder

In addition, the encoder can transpose a macroblock prior to encoding, although this type of switching between horizontal and vertical scanning increases the computational complexity of the encoder while decreasing the bitrate, on average, by only 1%. Thus, the encoder preferably operates so that horizontal macroblock scanning is always performed, thus decreasing the computational complexity of the encoder and having little effect on, i.e., increase of, the overall bit rate.

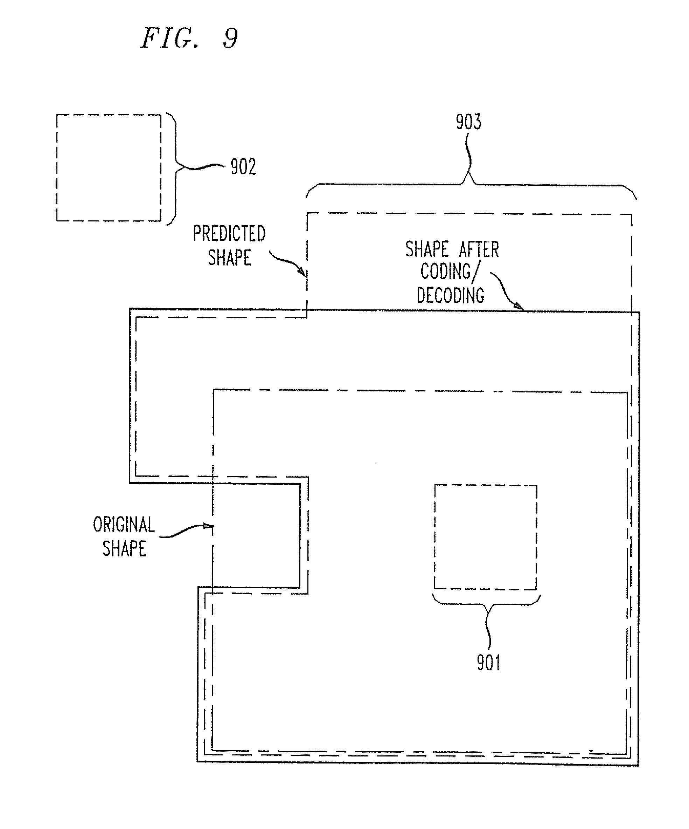

Fig. 8 shows a template used by the encoder in the inter mode to define the context for pels in boundary blocks. To exploit the temporal redundancy in the shape information, motion compensation is used so that a 2D integer pel motion vector is estimated using a full search for each macroblock to minimize the prediction error between the coded shape of the reference VOP S' and the shape of the current VOP S. The shape motion vectors are predictively encoded with respect to the shape motion vectors of neighboring macroblocks. If no shape motion vector is available, texture motion vectors are used as predictors. The shape motion vector of the current block is used to align the template shown in Fig. 8 for coding the shape information. Four pels of the context are neighbors of the pel to be coded, and 5 pels of the context are located in the motion compensated position on the reference VOP S'.

The subsampling and transposition options discussed above are also available in the inter mode However, as discussed above, subsampling and transposition are preferably not used For lossy shape coding, the encoder can also determine that the shape representation achieved by just carrying out motion compensation is sufficient, thus avoiding coding of the prediction error

MPEG-4 controls lossy shape coding by using an alpha threshold, which defines the maximum number of incorrectly coded pels in a macroblock. Thus, the topology of the shape can change, especially when isolated pels at the object boundary are coded as part of the object. Using morphological filters or other similar filtering to smooth object boundaries before shape coding can provide a much more predictable quality of a lossily encoded shape. The filtering can be implemented by the image analysis module 1 in the coding module 23, or in another module before the shape information is encoded When performed in the coding module 23, the filtering can be performed on the motion-compensated shape prediction error using the original shape of the object as a reference. Thus, a change in an object's topology can be avoided while maintaining a subjective appearance of the decoded video object and minimizing the overall bitrate of encoded image data. Morphological filtering can be performed on an entire VOP or on each boundary block of an object.

If morphological filtering is performed in the image analysis module 1, the object shape could be smoothed by applying an Erosion filter followed by a Dilation filter, or a median filter, or a morphological Opening or Closing. (The morphological operations Erosion, Dilation, Opening and Closing are well known to those skilled in the art and are not described in detail here) The result of this filtering is not the uncoded shape as it is defined in this invention, but just the input to the shape coder

If morphological filtering is performed in the shape coding module 23, filtering is done on a macroblock basis although neighboring blocks may be considered. The purpose of the filtering is to enable lossy shape coding while maintaining high subjective quality In a preferred embodiment, the filter compares the original shape with the motion-compensated predicted shape In a first step of the comparison, regions are marked that add holes or disconnected regions to the object, such as portions 901 and 902 shown in Fig 9. Next, pels are marked that have a distance larger than a given number of pels from the original shape. As an example, for a threshold of 1 pel, the pels identified by the portion 903 are marked. When lossy shape coding, the coder 23 preferably only corrects the marked pels. In this example, the result is that after encoding and decoding, the object has a shape shown in Fig. 9.

The encoding apparatus 10 is a general purpose data processing system, which can be a general purpose computer, or network of general purpose computers, and other associated devices, including communications devices, modems, and/or other circuitry or components necessary to perform the desired input/output or other functions. The encoding apparatus 10 can also be implemented, at least in part, as a single special purpose integrated circuit (e.g , ASIC) or an array of ASICs, each having a main or central processor section for overall, system-level control, and separate sections dedicated to performing various different specific computations, functions and other processes under the control of the central processor section The encoding apparatus 10 can also be implemented using a plurality of separate dedicated programmable integrated or other electronic circuits or devices, e.g., hardwired electronic or logic circuits such as discrete element circuits or programmable logic devices

The VOP memory 4 can be one or more volatile and/or non-volatile memory devices, such as optical disk, magnetic media, semiconductor or other memory devices

The image analysis module 1, parameter coding module 2, decoding module 3, the other coding modules 21, 22, 23 and 27, the padding modules 24 and 26 and/or the prediction module 25 can be implemented as software modules that are executed by the encoding apparatus 10 or any other suitable data processing apparatus Alternately, these modules can be implemented as hard-wired electronic circuits or other programmed integrated or other electronic circuits or devices, e g., hardwired electronic or logic circuits such as discrete element circuits or programmable logic devices.

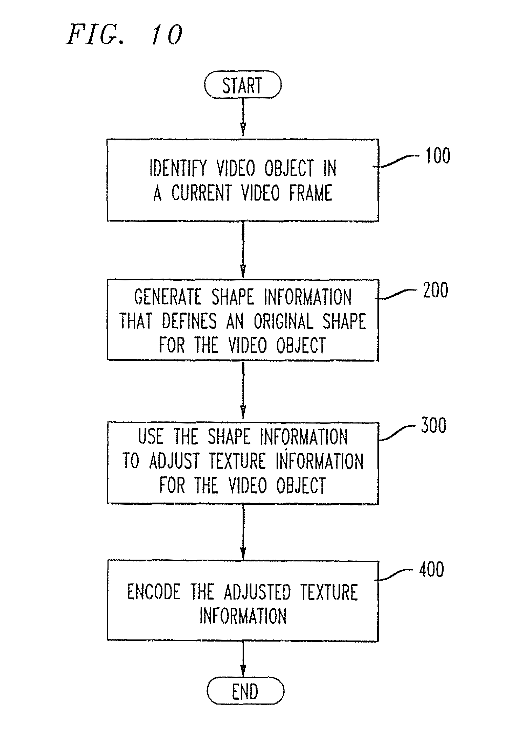

Fig. 10 is a flow chart of steps of a method for encoding texture information for a video object in a video image. In step 100, a video object in a video frame or other image data is identified. In step 200, shape information that defines the original shape of the video object is generated. That is, the shape information defines the shape or outline of the video object as represented in the raw incoming data. The original shape information is not shape information derived by encoding and then decoding the video object's shape or outline For example, a bitmap or other data defining the outline of the video object can be generated. In step 300, the shape information is used to adjust texture information for the video object. For example, the shape information can be used to identify and pad texture values for pels outside of the video object. Such padding can include "0 padding" described above, or other techniques, such as averaging pel values for portions of the image near the video object or in other portions of the image. In step 400, the adjusted texture information is encoded, for example, using a DCT or any other transform or encoding technique.

The above method can also include, e.g., between steps 200 and 300, the optional step of generating shape information that approximates the original shape of the video object. For example, this step could include generating lossy encoded shape information.

In practicing the invention it has been found that the present invention can be advantageously embodied to provide for method for encoding texture information for a video object, comprising: identifying a video object in image data representing at least an original shape and texture information for the video object; generating original shape information that represents an original shape of the video object; adjusting texture information in the image data using the original shape information; and encoding the adjusted texture information. The step of generating original shape information may comprise generating a bitmap defining the shape of the video object or may comprise identifying transparent, boundary and opaque macroblocks of pels of the video object. The step of adjusting texture information may comprise padding a texture prediction error for pels using a 0 padding technique or may comprise padding texture parameters for pels using a lowpass extrapolation filter or further may comprise replicating boundary pels in a horizontal direction, replicating boundary pels in a vertical direction, and assigning an average value of neighboring pels to transparent macroblocks bordering boundary blocks. The above method may further comprise lossy encoding shape information for the video object or lossy encoding shape information without subsampling or encoding shape information without vertical scanning of macroblocks. The latter method further advantageously comprises smoothing a boundary of the video object using filtering, wherein preferably the step of smoothing a boundary of the video object using filtering comprises one of using morphological filtering on an entire VOP and using morphological filtering on each boundary block of a VOP or wherein preferably the step of smoothing a boundary of the video object using filtering comprises using morphological filtering on a motion-compensated shape prediction error using the original shape information as a reference to avoid change of topology of the video object, minimize bitrate and maintain subjective image quality. Also according to the present invention there is provided a computer-readable recording medium containing image data that has been encoded according to the above method.

A preferred encoding apparatus according to the present invention comprises identifying means for identifying a video object in image data representing at least an original shape and texture information for the video object; generating means for generating original shape information that represents an original shape of the video object; adjusting means for adjusting texture information in the image data using the original shape information; and encoding means for encoding the adjusted texture information.

While this invention has been described in conjunction with specific embodiments thereof, it is evident that many alternatives, modifications, and variations will be apparent to those skilled in the art. Accordingly, preferred embodiments of the invention as set forth herein are intended to be illustrative, not limiting. Various changes may be made without departing from the spirit and scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An encoding apparatus comprising:
an image analysis module that generates shape, texture and motion information from image data representing at least a video object;
a parameter coding module that adjusts texture information generated by the image analysis module based on original shape information from the image analysis module and encodes the adjusted texture information and shape and motion information;
a decoding module that decodes encoded texture, shape and motion information from the parameter coding module; and
a memory that stores decoded data from the decoding module.

2. The encoding apparatus of claim 1, wherein the image analysis module generates original shape information comprising a bitmap defining a shape of the video object.

3. The encoding apparatus of claim 1, wherein the parameter coding module adjusts texture information by one of padding a texture prediction error for pels using a 0 padding technique and using a lowpass extrapolation filter.

4. The encoding apparatus of claim 1, wherein the parameter coding module adjusts texture information by replicating boundary pels in a horizontal direction, replicating boundary pels in a vertical direction, and assigning an average value of neighboring pels to transparent macroblocks bordering boundary blocks.

5. The encoding apparatus of claim 1, wherein the parameter coding module performs lossy shape coding.

6. The encoding apparatus of claim 1, wherein the parameter coding module performs lossy shape coding without subsampling.

7. The encoding apparatus of claim 1, wherein the parameter coding module performs shape coding without vertical scanning of macroblocks.

8. The encoding apparatus of claim 1, further comprising a smoothing module that smoothes a boundary of the video object using filtering.

9. The encoding apparatus of claim 8, wherein the smoothing module applies one of morphological filtering on an entire VOP and morphological filtering on each boundary block of a VOP.

10. The encoding apparatus of claim 8, wherein the smoothing module applies morphological filtering on a motion-compensated shape prediction error using the original shape information as a reference to avoid change of topology of the video object, minimize bitrate, and maintain subjective image quality.

11. A method of encoding texture information for a video object, the method comprising:
performing image analysis to create a bounding shape for a current video object plane Sₖ (VOP Sₖ);
estimating texture and shape motion parameters for the VOP Sₖ;
predictively encoding the texture and shape motion parameters with respect to a reference VOP S'ₖ₋₁;
transmitting and decoding the encoded texture and shape motion parameters; and
storing a new reference VOP in memory.

12. The method of claim 11, wherein the bounding shape is a rectangle.

13. The method of claims 11 or 12, wherein the texture motion parameters are texture motion vectors and shape motion parameters are shape motion vectors, and wherein predictively encoding the parameters further comprises:
encoding a shape of each boundary block using shape motion vectors and texture motion vectors for prediction;
padding the reference VOP S'ₖ₋₁;
padding a prediction error using original shape parameters to determine the area to be padded; and
encoding the texture of each macroblock.

14. The method of claim 13, wherein if the boundary block is not transparent, the method comprises coding its shape motion vector.

15. The method of claim 13, wherein if the shape of the boundary block is coded lossily, then the method comprises defining the texture of a macroblock using the original shape.

16. The method of claim 13, wherein encoding the texture of each macroblock is performed using DCT.

17. The method of claim 13, wherein padding the prediction comprises texture padding

18. The method of claim 13, wherein padding the reference VOP S'ₖ₋₁ further comprises using motion compensation (MC) padding.

19. The method of claim 13, wherein a shape motion vector coder knows which shape motion vector to code by analyzing possible lossily encoded shape parameters.

20. The method of claim 13, wherein padding the reference VOP S'ₖ₋₁ further comprises padding all boundary blocks and at least some transparent blocks of the reference VOP S'ₖ₋₁.

21. The method of claim 20, wherein the boundary blocks are padded using repetitive padding.

22. The method of claim 21, wherein repetitive padding further comprises:
replicating boundary pels in a horizontal direction; and
replicating boundary pels in a vertical direction, wherein if a value can be assigned to a pel by both padding directions, the method comprises assigning an average value to the pel.

23. The method of claim 17, wherein texture padding further comprises:
decoding the texture and discarding all information falling outside of the decoded shape; and
choosing the texture of pels outside of the object such that a bitrate is minimized.
